# NEUE EUROPÄISCHE PATENTSCHRIFT

(11) **EP 0 199 240 B2**
(45) Veröffentlichungstag und Bekanntmachung des Hinweises auf die Entscheidung über den Einspruch: **12.10.1994**
(45) Hinweis auf die Patenterteilung: 19.10.1988
(21) Anmeldenummer: 86105098.7
(22) Anmeldetag: 14.04.1986
(51) Int. Cl.: F16F 13/00, F16F 1/38

(54) **Vorspannbares und hydraulisch gedämpftes Lagerelement**
Prestressable mounting unit with hydraulic damping
Elément de support à amortissement hydraulique pouvant être précontraint

(30) Priorität: 19.04.1985 DE 3514268; 19.02.1986 DE 3605305
(43) Veröffentlichungstag der Anmeldung: 29.10.1986
(73) Patentinhaber: METZELER Gesellschaft mit beschränkter Haftung, D-80992 München (DE)
(72) Erfinder: Andrä, Rainer, Dr., D-6250 Limburg (DE); Bitschkus, Horst, D-5416 Hilgert (DE); Hofmann, Manfred, D-6257 Hünfelden (DE); Nelles, Uwe, D-5300 Bonn (DE)
(74) Vertreter: Seibert, Hannelore

(56) Entgegenhaltungen:
- EP-A- 0 071 698
- DE-A- 1 942 853
- DE-A- 3 441 806
- DE-C- 2 841 505
- GB-A- 2 010 438
- US-A- 2 614 896
- PATENTS ABSTRACTS OF JAPAN, Band 6, Nr. 26 (M-112)[904], 16. Februar 1982; & JP-A-56 143 830 (BRIDGESTONE TIRE K.K.) 09-11-1981

## Beschreibung

Die Erfindung bezieht sich auf ein vorspannbares und hydraulisch gedämpftes Lagerelement mit einer äußeren Lagerhülse und einem, von einem Elastomerkörper im Innern gehaltenen Innenteil, wobei der vom Innenteil angenähert radial nach beiden Seiten verlaufende Elastomerkörper oberhalb und unterhalb des Innenteils Kammern als mechanischen Federungsraum aufweist, die mit einer hydraulischen Flüssigkeit gefüllt sind und über einen Kanal miteinander in Verbindung stehen, und das Lagerelement stirnseitige Kappen aus elastisch verformbaren, elastomeren Material aufweist.

Ein derartiges Lagerelement ist aus der JP-A-56 143 830 bekannt. Dabei stehen die beiden flüssigkeitsgefüllten Kammern über einen am Umfang des einen radialen Elastomerkörpers verlaufenden Kanal miteinander in Verbindung, wobei dieser Kanal seitlich durch einen Dichtring aus Gummi abgeschlossen ist.

Durch diesen Überströmkanal zwischen den beiden flüssigkeitsgefüllten Kammern ist eine Dämpfung auftretender Schwingungen durch die Reibung der überströmenden Flüssigkeit an der Kanalwandung möglich. Wegen des konstanten Querschnittes dieses Überströmkanals, der sich auch bei starken Schwingungen und dadurch bedingten Verformungen des Elastomerkörpers nur unwesentlich ändert, ist auch eine Änderung des Dämpfungsverhaltens auch nur in sehr geringen Grenzen möglich, so daß die Dämpfung weitgehend unabhängig von jeweils auftretenden Amplituden ist.

Demgegenüber liegt der vorliegenden Erfindung die Aufgabe zugrunde, ein zusätzlich hydraulisch gedämpftes Lagerelement zu schaffen, dessen Dämpfung abhängig von der jeweils auftretenden Amplitude unterschiedlich hoch eingestellt werden kann. Außerdem soll eine breitbandige Absenkung der dynamischen Steifigkeit im akustischen Frequenzbereich ermöglicht werden.

Zur Lösung dieser Aufgabe ist ausgehend vom eingangs genannten Stand der Technik erfindungsgemäß vorgesehen, daß die Kappen ausschließlich zwischen sich und dem Elastomerkörper mindestens auf einer Stirnseite den Kanal bilden, wobei der Querschnitt des Kanals durch lastabhängige Verformung der Kappen veränderlich ist.

Durch diese Ausbildung der stirnseitig aufgesetzten Kappen aus einem elastisch verformbaren Material werden sich die Wandungsteile der Kappen je nach Einfederung des Lagerelementes bzw. je nach Größe der auftretenden Amplituden unterschiedlich auswölben, so daß sich dadurch ein jeweils unterschiedlicher Kanalquerschnitt zu dem innenliegenden Elastomerkörper ergibt.

Um auch eine lastabhängige Dämpfung in horizontaler Richtung zu erreichen, können zusätzlich beiderseits des Innenteils der Elastomerkörper ebenfalls axial verlaufende Kammern angeordnet sein, die mindestens zu einem der stirnseitigen Kanäle hin offen sind.

Zweckmäßigerweise weisen die Kappen einen äußeren und einen inneren Ring aus starrem Material auf, zwischen denen ein ringförmiges Wandungsteil aus elastomerem Material einvulkanisiert ist.

Zur Erreichung einer unterschiedlichen Dämpfung ist es dabei ferner von Vorteil, wenn der elastomere Wandungsteil über seinen Umfang unterschiedlichen Querschnitt aufweist. Dabei ist es besonders zweckmäßig, wenn der Wandungsteil im Bereich der unteren Kammer eine geringere Wandstärke als im übrigen Umfangsbereich aufweist.

Anhand einer schematischen Zeichnung sind Aufbau und Wirkungsweise eines Ausführungsbeispiels nach der Erfindung näher erläutert.

Dabei zeigen:
Fig. 1 einen Längsschnitt in vertikaler Richtung durch das Lagerelement,
Fig. 2 einen Querschnitt durch das Lagerelement entsprechend der Schnittlinie 11-11 nach Fig. 1,
Fig. 3 einen Längsschnitt durch eine der stirnseitigen Kappen entsprechend dem Schnitt nach Fig. 1,
Fig. 4 einen Längsschnitt durch ein Lagerelement in horizontaler Richtung entsprechend der Schnittlinie IV-IV nach Fig. 2 und
Fig. 5 einen Querschnitt durch das Lagerelement mit zusätzlichen, bei horizontal wirkenden Kräften beaufschlagten Kammern.

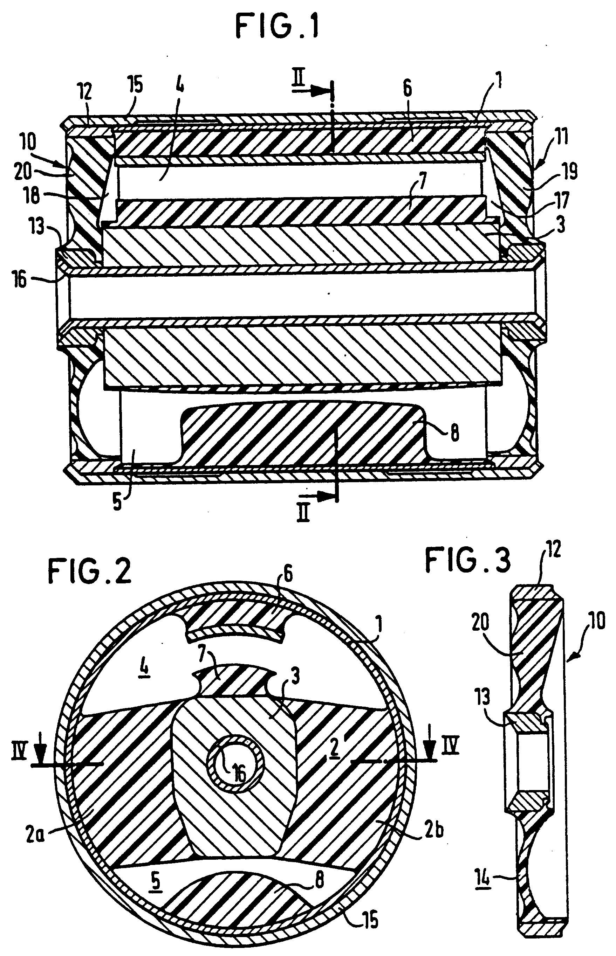

Wie zunächst aus Fig. 1, 2 und 4 ersichtlich ist, besteht das Lagerelement aus einer Lagerhülse 1, in die ein Elastomerkörper 2 einvulkanisiert ist. Dieser Elastomerkörper 2 besteht aus schräg radial tragenden Gummistegen 2 a und 2 b, die in ihrer Mitte eine innere Lagerbuchse 3 tragen. In dem dargestellten Ausführungsbeispiel weist die Lagerbuchse 3 einen etwa trapezförmigen äußeren Querschnitt auf, sie kann jedoch ebenso aus einem glatten Rohr bestehen. Durch die Gummistege 2 a und 2 b werden innerhalb der Lagerhülse 1 ein oberer Hohlraum 4 und ein unterer Hohlraum 5 begrenzt. Im oberen Hohlraum 4 kann dabei an die Lagerhülse 1 ein Anschlag 6 mit einem entsprechenden Gegenstück 7 auf der Lagerbuchse 3 und im unteren Hohlraum 5 ein weiterer Anschlag 8 aus elastomerem Material anvulkanisiert sein.

Dieses Lagerelement ist dabei in vorgespanntem, eingebautem Zustand gezeigt ; im nichtvorgespannten Zustand würde der Aufsatz 7 mit dem Anschlag 6 in Berührung stehen.

Dieses zunächst herkömmliche Lagerelement, das auch eine andere Konfiguration - jedoch basierend auf dem gleichen Grundprinzip - aufweisen kann, ist nun zur Ausgestaltung als hydraulisch gedämpftes Lager an seinen Stirnseiten mit je einer Kappe 10 und 11 versehen, die entsprechend dem Längsschnitt nach Fig. 3 einen äußeren Ring 12 und einen dazu konzentrischen inneren Ring 13 aufweisen, zwischen denen ein ringförmiges Wandungsteil 14 aus elastomerem Material einvulkanisiert ist. Diese beiden Kappen 10 und 11 werden seitlich auf das Lagerelement aufgesetzt und über einen außenliegenden Ring 15 und eine rohrförmige Innenbuchse 16 mit dem eigentlichen Lagerelement flüssigkeitsdicht verspannt.

Die Hohlräume 4 und 5 bilden jetzt nach außen abgeschlossene Kammern, die mit einer Hydraulikflüssigkeit gefüllt sind und über je einen ringförmigen Kanal 17 und 18 zwischen den Kappen 10 und 11 und dem eigentlichen Lagerelement miteinander in Verbindung stehen.

Bei entsprechender Belastung des Lagerelementes bzw. durch die in diese eingeleiteten Schwingungen wird die Flüssigkeit von der oberen Kammer 4 in die untere Kammer 5 und umgekehrt über die Kanäle 17 bzw. 18 verdrängt, wobei durch den Strömungswiderstand der Überströmkanäle 17 und 18 eine zusätzliche Dämpfung bewirkt wird. Dadurch, daß bei einer Be- oder Entlastung des Lagers oder entsprechend den auftretenden Schwingungsamplituden sich die Wandungen 19 und 20 unterschiedlich auswölben oder einzig hen, wird der Querschnitt der Überströmkanäle 17 und 18 amplitudenabhängig vergrößert oder verkleinert. Somit kann die Dämpfung des Lagers für bestimmte Amplituden kleiner und für andere größer gestaltet werden. Dabei sind durch spezielle Ausbildungen der Kappen 10 und 11 die unterschiedlichste Möglichkeiten gegeben. So können die elastomeren Wandungsteile 19 bzw. 20 über ihren Umfang unterschiedlichen Querschnitt aufweisen, wie sich das aus den Längsschnitten nach Fig. 1 und 3 sowie Fig. 4 ergibt. Bei der dargestellten Ausführungsform, bei der die die Kammer 5 begrenzenden Wandungsteile 19 und 20 dünner ausgeführt sind als im oberen Bereich, werden diese Wandungsteile bei einem Druckaufbau in der Kammer 5 sich auch leichter auswölben können. Durch diese Gestaltung wird eine breitbandige Absenkung der dynamischen Steifigkeit des Lagers-im akustischen Frequenzbereich möglich, wobei z. B. bei einer dünneren Wandung eine Absenkung der dynamischen Steifigkeit zu niedrigeren Frequenzen auftritt.

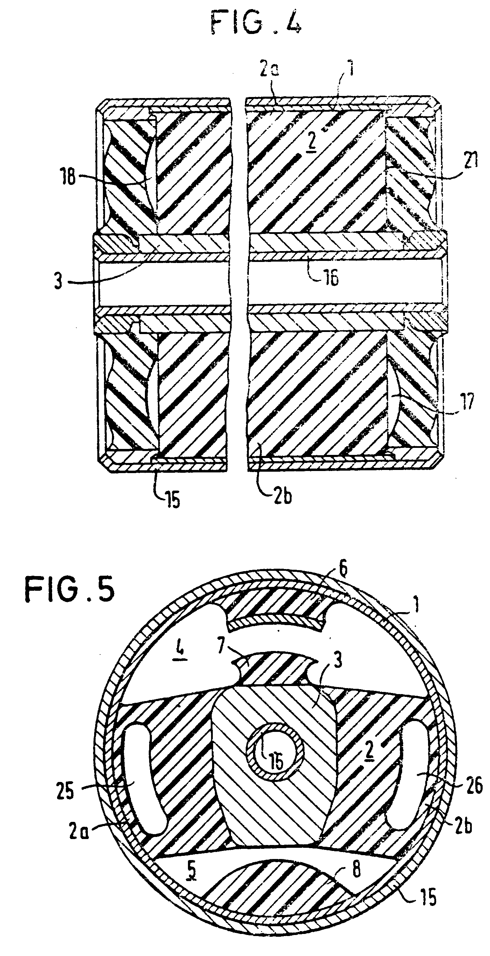

Eine weitere Möglichkeit zur Beeinflussung der Dämpfung besteht darin, daß man nur bestimmte Überströmkanäle offenläßt, wie sich das aus dem Längsschnitt nach Fig. 4 ergibt. So können beispielsweise Überströmkanäle 18 nur auf einer Stirnseite gebildet sein, oder aber auf einer Stirnseite bleibt nur ein Strömungskanal 17 offen, während durch entsprechende Gestaltung der Wandung, beispielsweise an der Stelle 21, das Kappenmaterial voll an den inneren Elastomerkörper anliegt.

Nach dem in Fig. 5 dargestellten Ausführungsbeispiel sind zusätzlich in den Gummisteg 2a eine axial verlaufende Kammer 25 und in den Gummisteg 2b eine ebenfalls axial verlaufende Kammer 26 eingelassen. Diese Kammern 25 und 26 können in Form von Kreisringabschnitten oder aber auch nierenförmig ausgebildet sein.

Durch die stirnseitig aufgesetzten Kappen 10 und 11 wird über die ringförmigen Kanäle 17 und 18 somit eine hydraulische Verbindung der vertikal übereinander liegenden Kammern 4 und 5 sowie der beiden horizontal zueinander liegenden Kammern 25 und 26 gebildet.

Damit kann bei einer horizontalen Belastung und entsprechenden Schwingungen über diese Kanäle 17 und 18 Flüssigkeit von der Kammer 25 in die Kammer 26 und umgedreht verdrängt werden.

Mit der zuletzt beschriebenen Ausbildung des Lagerelementes ist es also möglich, sowohl vertikale als auch horizontale Schwingungen gezielt zu dämpfen.

Insgesamt ergibt sich also ein hydraulisch gedämpftes, buchsenförmiges Lagerelement mit einem amplitudenabhängigen Kanalquerschnitt und frequenzentkoppelnden Seitenwänden, das durch einfache Gestaltungselemente eine große Variationsbreite bezüglich zu erreichender Dämpfung und einer breitbandigen Absenkung der dynamischen Steifigkeit aufweist.

## Patentansprüche

1. Vorspannbares und hydraulisch gedämpftes Lagerelement mit einer äußeren Lagerhülse (1) und einem von einem Elastomerkörper (2) im Innern gehaltenen Innenteil (3), wobei der vom Innenteil (3) angenähert radial nach beiden Seiten verlaufende Elastomerkörper (2a, 2b) oberhalb und unterhalb des Innenteils (3) Kammern (4, 5) als mechanischen Federungsraum aufweist, die mit einer hydraulischen Flüssigkeit gefüllt sind und über einen Kanal (17, 18) miteinander in Verbindung stehen, und das Lagerelement stirnseitige Kappen (10, 11) aus elastisch verformbarem, elastomerem Material aufweist, dadurch gekennzeichnet, daß die Kappen (10, 11) ausschließlich zwischen sich und dem Elastomerkörper (2a, 2b) mindestens auf einer Stirnseite den Kanal (17, 18) bilden, wobei der Querschnitt des Kanals (17, 18) durch lastabhängige Verformung der Kappen (10, 11) veränderlich ist.

2. Lagerelement nach Anspruch 1, dadurch gekennzeichnet, daß beiderseits des Innenteils (3) innerhalb der Elastomerkörper (2a, 2b) zusätzliche axial verlaufende Kammern (25, 26) angeordnet sind, die mindestens zu einem der stirnseitigen Kanäle (17, 18) hin offen sind.

3. Lagerelement nach Anspruch 1, dadurch gekennzeichnet, daß die Kappen (10, 11) einen äußeren und einen inneren Ring (12, 13) aus starrem Material aufweisen, zwischen denen ein ringförmiger Wandungsteil (19, 20) aus elastomerem Material einvulkanisiert ist.

4. Lagerelement nach Anspruch 3, dadurch gekennzeichnet, daß der elastomere Wandungsteil (19, 20) über seinen Umfang unterschiedlichen Querschnitt aufweist.

5. Lagerelement nach Anspruch 4, dadurch gekennzeichnet, daß der Wandungsteil (19, 20) im Bereich der unteren Kammer (5) eine geringere Wandstärke als im übrigen Umfangsbereich aufweist.

## Claims

1. Prestressable and hydraulically damped bearing element having an outer bearing sleeve (1) and an inner part (3), held inside by an elastomer member (2), the elastomer member (2a, 2b), running approximately radially from the inner part (3) to both sides, having above and below the inner part (3) chambers (4, 5) as mechanical spring space, which chambers are filled with a hydraulic fluid and are in connection with each other via a channel (17, 18), and the bearing element having end caps (10, 11) of elastically deformable, elastomeric material, characterized in that the caps (10, 11) form the channel (17, 18) exclusively between themselves and the elastomer member (2a, 2b) at least on one end face, the cross-section of the channel (17, 18) being variable by load-dependent deformation of the caps (10, 11).

2. Bearing element according to Claim 1, characterized in that additional axially running chambers (25, 26) are arranged on both sides of the inner part (3) inside the elastomer member (2a, 2b), which chambers are open at least towards one of the end channels (17, 18).

3. Bearing element according to Claim 1, characterized in that the caps (10, 11) have an outer and an inner ring (12, 13) of rigid material, between which an annular wall part (19, 20) of elastomeric material is vulcanized-in.

4. Bearing element according to Claim 3, characterized in that the elastomeric wall part (19, 20) has a cross-section differing around its circumference.

5. Bearing element according to Claim 4, characterized in that the wall part (19, 20) has a smaller wall thickness in the region of the lower chamber (5) than in the remaining circumferential region.

## Revendications

1. Élément de support à amortissement hydraulique, pouvant être précontraint, comportant un manchon extérieur de support (1) et une partie intérieure (3) maintenue intérieurement par un corps élastomère (2), le corps élastomère (2a,2b), qui s'étend radialement des deux côtés dans une position rapprochée de la partie intérieure (3), possédant, au-dessus et au-dessous de la partie intérieure (3), des chambres (4,5) qui constituent un espace d'amortissement mécanique, qui sont remplies par un liquide hydraulique et qui sont reliées entre elles par l'intermédiaire d'un canal (17,18), et l'élément de support possédant des capots frontaux (10,11) en un matériau élastomère élastiquement déformable, caractérisé par le fait que les capots (10,11) forment le canal (17,18) exclusivement entre eux et le corps élastomère (2a,2b) au moins sur une face frontale, la section transversale du canal (17,18) pouvant être modifiée par déformation, qui dépend de la charge, des capots (10,11).

2. Élément de support suivant la revendication 1, caractérisé par le fait que des deux côtés de la partie intérieure (3) sont disposées, à l'intérieur du corps élastomère (2a,2b), des chambres supplémentaires (25,26), qui s étendent axialement et qui s'ouvrent au moins en direction de l'un des canaux frontaux (17,18).

3. Élément de support suivant la revendication 1, caractérisé par le fait que les capots (10,11) comportent une bague extérieure et une bague intérieure (12,13), qui sont en un matériau rigide et entre lesquelles est fixé par vulcanisation un élément annulaire de paroi (19,20) en un matériau élastomère.

4. Élément de support suivant la revendication 3, caractérisé par le fait que l'élément de paroi élastomère (19,20) possède une section transversale variable sur son pourtour.

5. Élément de support suivant la revendication 4, caractérisé par le fait que l'élément de paroi (19,20) possède, au niveau de la chambre inférieure (5), une épaisseur de paroi plus faible que dans le reste de la zone périphérique.
